# EUROPÄISCHE PATENTSCHRIFT

(11) **EP 1 745 386 B1**
(45) Veröffentlichungstag und Bekanntmachung des Hinweises auf die Patenterteilung: **05.03.2008**
(21) Anmeldenummer: 05737405.0
(22) Anmeldetag: 30.04.2005
(51) Int. Cl.: G06F 13/40

(54) **STEUERUNGSSCHALTUNG FÜR EINE BUSPLATINE EINES COMPUTERSYSTEMS**
CONTROL CIRCUIT FOR THE BUS BOARD OF A COMPUTER SYSTEM
CIRCUIT DE COMMANDE POUR UNE CARTE DE BUS D'UN SYSTEME INFORMATIQUE

(30) Priorität: 11.05.2004 DE 102004023737
(43) Veröffentlichungstag der Anmeldung: 24.01.2007
(73) Patentinhaber: Plein & Baus GmbH, 51399 Burscheid-Hilgen (DE)
(72) Erfinder: KÖSTER, Andreas, 42929 Wermelskirchen (DE)
(74) Vertreter: Schneiders, Josef
(86) Internationale Anmeldenummer: PCT/EP2005/004717
(87) Internationale Veröffentlichungsnummer: WO 2005/111821

(56) Entgegenhaltungen:
- EP-A- 0 271 626
- US-A- 5 617 081
- US-A- 5 798 901
- PATENT ABSTRACTS OF JAPAN Bd. 2000, Nr. 05, 14. September 2000 (2000-09-14) & JP 2000 035839 A (NEC ENG LTD), 2. Februar 2000 (2000-02-02)

## Beschreibung

Die Erfindung betrifft eine Steuerungsschaltung für eine Busplatine eines Computersystems mit einem elektronischen Detektionselement, welches einerseits mit einem Ausgangsanschluss eines Steckplatzes der Busplatine und andererseits mit einem Oberbrückungsschaltelement verbunden ist, wobei mittels des Oberbrückungsschaltelementes Eingangs- und Ausgangsanschlüsse des Steckplatzes überbrückbar sind.

Übliche Architekturen von Computersystemen weisen einen Datenbus auf, über welchen die verschiedenen Baugruppen des Computersystems miteinander verbunden sind. Über den Datenbus erfolgt die Datenübertragung zum Zwecke der Kommunikation zwischen den einzelnen Baugruppen. Außerdem werden über den Datenbus Steuersignale, wie z. B. Unterbrechungssignale (engl. "interrupt"), übertragen.

Insbesondere bei Computersystemen, die eine Busplatine gemäß dem bekannten VME-Busstandard aufweisen, kann der Datenbus prioritätsverkettete Signalleitungen (z.B. sog. "Bus Grant"- oder "Interrupt Acknowledge"-Signalleitungen, abgekürzt IACKINIIACKOUT bzw. Bgx)N/ BGxOUT) umfassen. Gemäß dieser Technik, die auch als "Daisy-Chain" bezeichnet wird, wird ein Signal über den Datenbus von Steckplatz zu Steckplatz weitergeleitet. Dabei wird von einer in einen Steckplatz der Busplatine eingesteckten Steckkarte an deren Eingangsanschluss ein Signal registriert, verarbeitet und danach auf den zugehörigen Ausgangsanschluss des Steckplatzes weitergegeben. Von dort erreicht das Signal die in den nächsten Steckplatz der Busplatine eingesteckte Steckkarte. Durch diese Anordnung wird eine Prioritätsverkettung entsprechend der Reihenfolge der in die Steckplätze eingesteckten Steckkarten erreicht. Eine in einen beliebigen Steckplatz eingesteckte Steckkarte erhält das Signal nämlich erst, wenn dieses zuvor die in den vorangegangenen Steckplätzen befindlichen Steckkarten durchlaufen hat.

Es ist ein bekanntes Problem, dass bei Busplatinen mit Daisy-Chain-Verkettung sichergestellt sein muss, dass die prioritätsverkettete Signalleitung nicht unterbrochen ist, was beispielsweise vorkommen kann, wenn in einen der prioritätsverketteten Steckplätze keine Steckkarte eingesteckt ist, um das Signal an die nachgeordneten Steckkarten weiterzuleiten. Zur Umgehung dieser Problematik ist es aus dem Stand der Technik bekannt, die entsprechenden Eingangs- und Ausgangsanschlüsse eines freien Steckplatzes mittels manuell zu betätigender Steckbrücken (engl. "Jumper") oder mittels automatisch betätigter mechanischer Schalter zu überbrücken.

Aus der EP 0 393 302 B1 ist eine Steuerungsschaltung für eine Busplatine vorbekannt, welche die Ein- und Ausgangsanschlüsse mittels eines einfachen Logikelementes überbrückt und das resultierende Signal an den jeweils nachfolgenden Steckplatz weiterleitet. Diese Art der Steuerungsschaltung ist nachteiligerweise mit neueren VME-Signalstandards (sog. "Chained Block Transfer" und "Multicast Command") nicht kompatibel. Gemäß diesen Standards müssen nämlich die Eingangssignale an einem Steckplatz mit den Ausgangssignalen des jeweils vorgeschalteten Steckplatzes absolut identisch sein, und zwar unabhänging von den Eingangssignalen des vorgeschalteten Steckplatzes. Dies kann die vorbekannte Steuerungsschaltung aber nicht gewährleisten.

Aus der EP 0 500 374 B1 ist eine weitere Steuerungsschaltung zur automatischen Konfigurierung von Daisy-Chain-Signalleitungen bekannt. Bei dem vorbekannten System wird den Ausgangsanschlüssen der einzelnen Steckplätze der Busplatine eine Kontrollspannung aufgeprägt, wobei der Spannungswert dieser Kontrollspannung in einem für die Digitalelektronik unzulässigen Bereich liegt. Als elektronische Detektionselemente kommen bei der vorbekannten Steuerungsschaltung Analogkomparatoren zum Einsatz, mittels welchen der unzulässige Spannungswert von einem zulässigen Logikpegel unterschieden werden kann. Die Detektionselemente sind wiederum mit elektronischen Mehrfachschaltelementen verbunden. Durch die vorbekannte Steuerungsschaltung werden mittels der Schaltelemente die entsprechenden Eingangs- und Ausgangsanschlüsse der Steckplätze überbrückt, wenn mittels der Analogkomparatoren an den Ausgangsanschlüssen des betreffenden Steckplatzes der unzulässige Kontrollspannungswert detektiert wird. Falls in einen so überwachten Steckplatz eine Steckkarte eingesteckt ist, so ist sichergestellt, dass an den Ausgangsanschlüssen dieses Steckplatzes ein zulässiger Logikpegel anliegt, der von der eingesteckten Steckkarte selbst generiert wird. Dies wird gemäß der vorbekannten Steuerungsschaltung dadurch erreicht, dass die im unzulässigen Spannungsbereich liegende Kontrollspannung über hochohmige Widerstände den Steckplatzanschlüssen aufgeprägt wird. Falls mittels der Detektionselemente entsprechend ein zulässiger Logikpegel an den Anschlüssen des Steckplatzes detektiert wird, so werden die elektronischen Schaltelemente so angesteuert, dass die Überbrückung des Steckplatzes aufgehoben wird, damit die in den Steckplatz eingesteckte Steckkarte ordnungsgemäß funktionieren kann. Nachteilig ist bei Steuerungsschaltungen für Busplatinen der vorbeschriebenen Art zum einen, dass diese aufgrund der eingesetzten Analogelektronik vergleichsweise aufwendig sind, woraus hohe Herstellungskosten für die Busplatinen resultieren.

Nachteilig ist weiterhin, dass die aus den zitierten europäischen Patentschriften vorbekannten Steuerungsschaltungen nicht mit neueren VME-Busstandards kompatibel ist. Gemäß dem neueren, so genannten VME64X-Standard ist insbesondere vorgesehen, dass Steckkarten während des laufenden Betriebs des Computersystems in die Steckplätze der Busplatine eingesteckt und aus diesen wieder entnommen werden können (engl. "Live-Insertion"). Gemäß diesem Standard wird von der eingesteckten Steckkarte selbst ein separates Digitalsignal generiert (so genanntes "LI/O"-Signal), mittels welchem ein Überbrückungsschaltelement, das zur Überbrückung des betreffenden Steckplatzes vorgesehen ist, deaktivierbar ist.

Vor diesem Hintergrund ist es Aufgabe der Erfindung, eine Schaltung zur Detektion von in Steckplätze einer Busplatine eingesteckten Steckkarten zu schaffen, welche auch zu neueren Busstandards, insbesondere zum VME64X-"Live-Insertion"-Standard, kompatibel ist. Dabei soll die Steuerungsschaltung einfach und kostengünstig realisierbar sein.

Diese Aufgabe löst die Erfindung ausgehend von einer Steuerungsschaltung der eingangs genannten Art dadurch, dass das Detektionselement ein Speicherelement umfasst, mittels welchem ein in einem Initialisierungszustand des Computersystems an dem Ausgangsanschluss anliegendes Logiksignal speicherbar ist.

Grundidee der Erfindung ist es, zur Detektion einer in einen Steckplatz der Busplatine eingesteckten Steckkarte auszunutzen, dass im Initialisierungszustand (auch "System-Reset" genannt) definierte Logikpegel an den Anschlüssen des Steckplatzes anliegen, wobei anhand dieser Logikpegel eindeutig festgestellt werden kann, ob in den Steckplatz eine Steckkarte eingesteckt ist oder nicht. Das Speicherelement speichert das im Initialisierungszustand am Steckplatzanschluss festgestellte Logiksignal. In Abhängigkeit von dem gespeicherten Logiksignal wird das entsprechende Überbrückungsschaltelement angesteuert, um die Eingangs- und Ausgangsanschlüsse des Steckplatzes zu überbrücken, falls entsprechend dem gespeicherten Logiksignal keine Steckkarte in den Steckplatz eingesteckt ist.

Ein wesentlicher Vorteil der erfindungsgemäßen Steuerungsschaltung besteht darin, dass diese mit wenigen Bauelemente der üblichen Digitalelektronik realisiert werden kann. Eine Busplatine mit der erfindungsgemäßen Steuerungsschaltung ist daher kostengünstig herstellbar.

Auch ist die erfindungsgemäße Steuerungsschaltung kompatibel zu modernen VME-Busstandards. Das von "Live-Insertion"-kompatiblen Steckkarten generierte Signal kann ohne weiteres von dem Detektionselement der erfindungsgemäßen Steuerungsschaltung verarbeitet werden, um so das Überbrückungsschaltelement des betreffenden Steckplatzes anzusteuern. Weiterhin ist die erfindungsgemäße Steuerungsschaltung vorteilhafterweise zu den oben erwähnten "Chained Block Transfer"- und "Multicast Command"-Signalbeschreibungen für VME-Bussysteme kompatibel.

Zweckmäßigerweise weist die erfindungsgemäße Steuerungsschaltung eine Signalerzeugungsschaltung auf, mittels welcher an einem dem Ausgangsanschluss zugeordneten Eingangsanschluss in dem Initialisierungszustand des Computersystems ein definiertes Logiksignal erzeugbar ist. Durch eine solche Signalerzeugungsschaltung kann sichergestellt werden, dass in dem Initialisierungszustand des Computersystems an dem entsprechenden Anschluss des Steckplatzes ein definierter Logiksignalpegel anliegt, so dass aus dem an dem Ausgangsanschluss in dem Initialisierungszustand anliegenden Logiksignal eindeutig darauf geschlossen werden kann, ob in den Steckplatz eine Steckkarte eingesteckt ist oder nicht.

Weiterhin ist es vorteilhaft, wenn das Detektionselement der erfindungsgemäßen Steuerungsschaltung ein Logikelement zur logischen Verknüpfung des gespeicherten Logiksignals mit einem von einer in den Steckplatz eingesteckten Steckkarte generierten Logiksignal umfasst. Diese Ausgestaltung der erfindungsgemäßen Steuerungsschaltung betrifft vor allem den Einsatz im Zusammenhang mit dem oben erwähnten VME64X-"Live-Insertion"-Standard. Wenn ein von der eingesteckten Steckkarte selbst generiertes Logiksignal (LI/O-Signal) registriert wird, muss auf jeden Fall die Überbrückung des betreffenden Steckplatzes aufgehoben werden. Dies kann einfach dadurch erreicht werden, dass durch das Logikelement das mittels des Speicherelementes gespeicherte Logiksignal mit dem von der Steckkarte generierten Logiksignal geeignet verknüpft wird. Die gewünschte Funktionalität kann einfach und kostengünstig durch ein einziges zusätzliches Logikgatter realisiert werden. Bei diesem kann es sich beispielsweise um ein Und- oder ein Nicht-Und-Gatter handeln.

Im einfachsten Fall handelt es sich bei dem Speicherelement der erfindungsgemäßen Steuerungsschaltung um ein sogenanntes Flip-Flop. Ein Flip-Flop ist bekanntlich ein Standardbauelement der Digitalelektronik und kann kostengünstig für die erfindungsgemäße Steuerungsschaltung eingesetzt werden. Zur Speicherung des an dem Ausgangsanschluss anliegenden Logiksignals wird dem Takteingang des Flip-Flops zweckmäßigerweise ein nur im Initialisierungszustand des Computersystems aktives System-Reset-Signal zugeführt, während das zu speichernde Logiksignal selbst am Dateneingang des Flip-Flops anliegt. Das beim System-Reset des Computersystems an dem Ausgangsanschluss anliegende Logiksignal wird dann nach Beendigung des System-Resets am Ausgang des Flip-Flops abgefragt und zur entsprechenden Ansteuerung des Überbrückungsschaltelements genutzt.

Wenn bei der erfindungsgemäßen Steuerungsschaltung der Ausgangsanschluss, der mittels des Detektionselementes überwacht wird, einer prioritätsverketteten Signalleitung ("Daisy-Chain") der Busplatine zugeordnet ist, so sind sinnvollerweise Unterbrechungsschaltelemente zur Unterbrechung der prioritätsverketteten Signalleitung in dem Initialisierungszustand des Computersystems vorgesehen. Mittels der Unterbrechungsschaltelemente kann sichergestellt werden, dass die einzelnen Steckplätze der Busplatine während eines Systems-Resets voneinander getrennt sind und zuverlässig und unabhängig voneinander daraufhin überprüft werden können, ob jeweils eine Steckkarte eingesteckt ist oder nicht. Insbesondere sind die Unterbrechungsschaltelemente von Vorteil, wenn in der oben beschriebenen Art und Weise eine Signalerzeugungsschaltung zum Einsatz kommt, um in dem Initialisierungsstand des Computersystems ein definiertes Logiksignal an den betreffenden Signalanschlüssen zu erzeugen.

Ein Ausführungsbeispiel der Erfindung wird im folgenden anhand der Figuren erläutert. Es zeigen:
- Figur 1: schematische Schaltskizze einer Busplatine eines Computersystems mit prioritätsverketteter Signalleitung;
- Figur 2: einzelner Steckplatz der Busplatine gemäß Figur 1 mit erfindungsgemäßer Steuerungsschaltung.

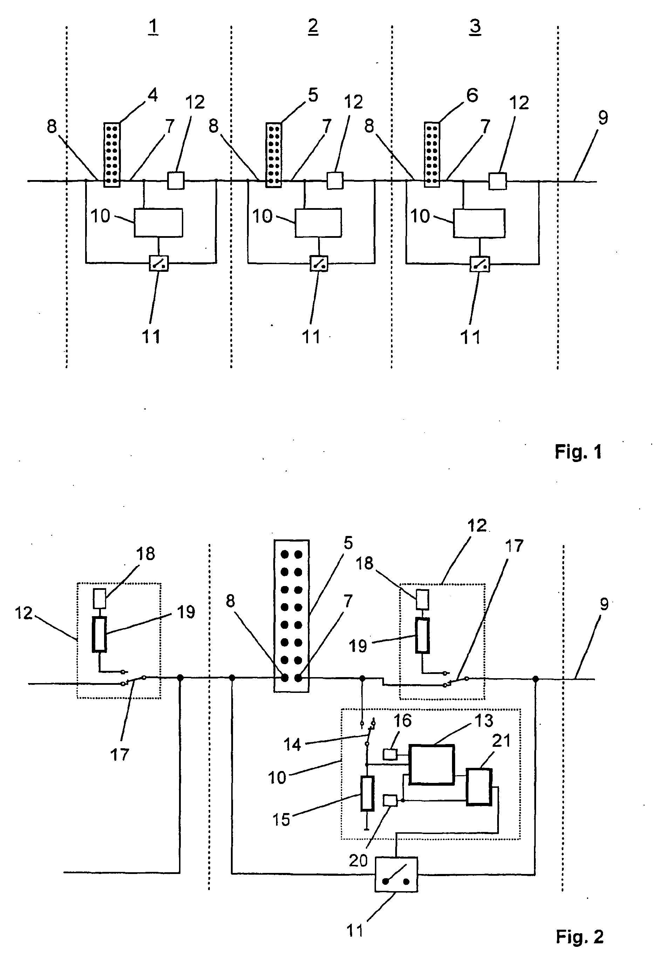

Die in der Figur 1 schematisch dargestellte Busplatine weist drei Steckplätze 1, 2 und 3 auf. Die den Steckplätzen 1, 2 und 3 jeweils zugeordneten Bauelemente sind durch die in der Figur 1 zu erkennenden gestrichelten Linien voneinander getrennt. Jedem Steckplatz 1, 2 und 3 ist jeweils ein Anschlussstecker 4, 5 bzw. 6 für eine in den betreffenden Steckplatz einzusteckende Steckkarte zugeordnet. Jeder der Anschlussstecker 4, 5 und 6 weist einen Ausgangsanschluss 7 (z.B. IACKOUT gemäß dem VME-Standard) und einen Eingangsanschluss 8 (z.B. IACKIN) auf. Über die Anschlüsse 7 und 8 sind die einzelnen Verbindungsstecker 4, 5 und 6 mit einer prioritätsverketteten Signalleitung 9 ("Daisy-Chain") verbunden. Jedem der Steckplätze 1, 2 und 3 ist jeweils ein elektronisches Detektionselement 10 zugeordnet, welches einerseits mit dem Ausgangsanschluss 7 des betreffenden Anschlusssteckers 4, 5 bzw. 6 und andererseits mit einem Überbrückungsschaltelement 11 verbunden ist. Wie in der Figur 1 zu erkennen ist, sind mittels der Überbrückungsschaltelemente 11 jeweils die Eingangsanschlüsse 8 und die Ausgangsanschlüsse 7 der Steckplätze 1, 2 und 3 überbrückbar. Gemäß der Erfindung umfassen die Detektionselemente 10 jeweils Speicherelemente, mittels welchen in einem Initialisierungszustand des Computersystems an den betreffenden Ausgangsanschlüssen 7 anliegende Logiksignale unabhängig für jeden Steckplatz 1, 2 und 3 speicherbar sind. Die Figur 1 zeigt außerdem jedem Steckplatz 1, 2 und 3 zugeordnete Signalerzeugungsschaltungen 12, mittels welchen an den Eingangsanschlüssen 8 in dem Initialisierungszustand des Computersystems jeweils definierte Logiksignale erzeugbar sind. Dabei ist es so, dass beispielsweise die dem Steckplatz 1 zugeordnete Signalerzeugungsschaltung 12 das entsprechende Logiksignal am Eingangsanschluss 8 des Steckplatzes 2 erzeugt, während die Signalerzeugungsschaltung 12 des Steckplatzes 2 für die Erzeugung des entsprechenden Logiksignals am Eingangsanschluss 8 des Steckplatzes 3 zuständig ist usw.

Die Figur 2 zeigt den Steckplatz 2 der Busplatine gemäß Figur 1 detaillierter. Das Detektionselement 10 umfasst, wie oben ausgeführt, ein Speicherelement 13, bei welchem es sich um ein Flip-Flop handelt. Dem Dateneingang des Flip-Flops 13 wird das an dem Ausgangsanschluss 7 anliegende Logiksignal über einen elektronischen Schalter 14 zugeführt. Dieser elektronische Schalter 14 wird bei einem System-Reset des Computersystems aus der in der Figur 2 dargestellten Normalstellung in die Detektionsstellung zur Verbindung des Ausgangsanschlusses 7 mit einem Widerstand 15 umgeschaltet. Dem Flip-Flop 13 wird am Takteingang ein Signal 16 zugeführt, das bei einem System-Reset des Computersystems aktiviert wird. Auf diese Weise wird im Initialisierungszustand des Computersystems das an dem Anschluss 7 anliegende Signal mittels des Flip-Flops gespeichert. Wie in der Figur 2 weiterhin zu erkennen ist, umfassen die Signalerzeugungsschaltungen 12 jeweils Unterbrechungsschaltelemente 17 zur Unterbrechung der prioritätsverketteten Signalleitung 9 in dem Initialisierungszustand des Computersystems. Bei einem System-Reset werden die Unterbrechungsschaltelemente 17 aus dem in der Figur 2 dargestellten Normalzustand umgeschaltet, so dass über die Unterbrechungsschaltelemente 17 den Eingangsanschlüssen 8 jeweils ein Signal 18 (z. B. 5 Volt) über einen Widerstand 19 zugeführt wird. Dem Flip-Flop 13 wird bei dem in der Figur 2 dargestellten Ausführungsbeispiel außerdem ein von einer beispielsweise in den Steckplatz 5 eingesteckten Steckkarte generiertes Logiksignal 20 (LI/O-Signal gemäß dem VME-Busstandard) an seinem Rücksetzeingang zugeführt. Gleichzeitig werden das Ausgangssignal des Flip-Flops 13 und das Logiksignal 20 mittels eines Logikelementes 21 verknüpft. Das Logikelement 21 steht wiederum mit dem Überbrückungsschaltelement 11 in Verbindung, so dass in Abhängigkeit von dem Ausgangssignal des Logikelementes 21 die Ein- und Ausgangsanschlüsse 8 bzw. 7 überbrückbar sind.

Das in der Figur 2 dargestellte Ausführungsbeispiel der erfindungsgemäßen Steuerungsschaltung arbeitet wie folgt:

Bei einem System-Reset des Computersystems werden die Schaltelemente 14 und 17 aus dem Normalzustand in den Detektionszustand umgeschaltet. Dementsprechend liegt das Signal 18 über den Widerstand 19 an dem Eingangsanschluss 8 an. Aus dem in diesem Zustand an dem Ausgangsanschluss 7 anliegenden Logiksignal kann darauf geschlossen werden, ob in den Steckplatz 2 eine Steckkarte eingesteckt ist oder nicht. Bezogen auf den VME-Busstandard sind die folgenden Fälle zu unterscheiden:
a) Wenn in den Steckplatz 2 keine Steckkarte eingesteckt ist, so besteht keine Verbindung zwischen dem Eingangsanschluss 8 und dem Ausgangsanschluss 7. Das Signal 18 wird also nicht an den Ausgangsanschluss 7 weitergegeben. Der Dateneingang des Flip-Flops 13 liegt somit beim System-Reset über den Widerstand 15 auf Massepotential. In diesem Fall speichert das Flip-Flop 13 entsprechend den logischen Wert "0". Dieser wird über den Ausgang des Flip-Flops 13 dem Logikgatter 21, bei welchem es sich um ein Nicht-Und-Gatter handelt, zugeführt. Bei dem Signal 20, das mittels des Logikgatter 21 mit dem Ausgangssignal des Flip-Flops 13 verknüpft wird, handelt es sich gemäß dem VME64X-"Live-Insertion"-Standard, wie oben ausgeführt, um das sogenannten LI/O-Signal, Dieses ist, wenn keine Steckkarte eingesteckt ist, ebenfalls deaktiviert. Das Signal am Ausgang des Nicht-Und-Gatters 21 ist somit logisch "1", was dazu führt, dass das Überbrückungsschaltelement 11 zur Überbrückung der Anschlüsse 7 und 8 aktiviert wird. Nach Beendigung des System-Resets werden die Schalter 14 und 17 in den Normalzustand zurückgeschaltet, so dass die "Daisy-Chain"-Signalleitung 9 geschlossen ist und das System ordnungsgemäß funktionieren kann.
b) Sobald eine zu dem "Live-Insertion"-Standard kompatible Karte in den Steckplatz 2 eingesteckt wird, wechselt das LI/O-Signal 20 aus dem deaktivierten in den aktivierten Zustand. Dies führt dazu, dass am Ausgang des Nicht-Und-Gatters das Logiksignal auf "O" wechselt, so dass das Überbrückungsschaltelement 11 geöffnet wird und die Signalleitung 9 durch die in den Steckplatz 2 eingesteckte Steckkarte hindurch geschlossen ist. Demnach ist mit der erfindungsgemäßen Steuerungsschaltung ein Einstecken von "Live-Insertion"-kompatiblen Steckkarten während des laufenden Betriebs des Computersystems ohne weiteres möglich.
c) Wenn in den Steckplatz 2 eine Steckkarte mit einer Überbrückung der Anschlüsse 7 und 8 der Signalleitung 9 eingesteckt wird, so liegt am Ausgangsanschluss 7 bei einem System-Reset das Signal 18 an. Demnach speichert das Flip-Flop den logischen Wert "1", der dann entsprechend auch am Ausgang des Flip-Flops anliegt. Das Signal 20 ist deaktiviert. Demzufolge liegt am Ausgang des Nicht-Und-Gatters 21 der logische Wert "0" an, was bewirkt, dass das Überbrückungsschaltelement 11 geöffnet ist. Die Signalleitung 9 ist durch die Überbrückung der Anschlüsse 7 und 8 geschlossen, so dass das Computersystem ordnungsgemäß funktioniert.
d) Wenn in den Steckplatz 2 eine Steckkarte eingesteckt ist, die zu einem älteren VME-Busstandard mit "Daisy-Chain" kompatibel ist, so liegt an dem Ausgangsanschluss 7 bei einem System-Reset konventionsgemäß ein hoher Signalpegel (logisch "1") an. Demnach wird mittels des Flip-Flops 13 der logischen Wert "1" gespeichert, was, wie bei dem unter c) abgehandelten Fall beschrieben, dazu führt, dass das Überbrückungsschaltelement 11 geöffnet ist, so dass die eingesteckte Steckkarte ordnungsgemäß in die Signalleitung 9 eingebunden ist.

## Patentansprüche

1. Steuerungsschaltung für eine Busplatine eines Computersystems, mit einem elektronischen Detektionselement (10), welches einerseits mit einem Ausgangsanschluss (7) eines Steckplatzes (1, 2, 3) der Busplatine und andererseits mit einem Überbrückungsschaltelement (11) verbunden ist, wobei mittels des Überbrückungsschaltelementes (11) Eingangs- und Ausgangsanschlüsse (7, 8) des Steckplatzes (1, 2, 3) überbrückbar sind, **dadurch gekennzeichnet, dass** das Detektionselement (10) ein Speicherelement (13) umfasst, mittels welchem ein in einem Initialisierungszustand des Computersystems an dem Ausgangsanschluss (7) anliegendes Logiksignal speicherbar ist.

2. Steuerungsschaltung nach Anspruch 1, **gekennzeichnet durch** eine Signalerzeugungsschaltung (12), mittels welcher an einem dem Ausgangsanschluss (7) zugeordneten Eingangsanschluss (8) in dem Initialisierungszustand des Computersystems ein definiertes Logiksignal erzeugbar ist.

3. Steuerungsschaltung nach Anspruch 1 oder 2, **dadurch gekennzeichnet, dass** das Detektionselement (10) außerdem ein Logikelement (21) zur logischen Verknüpfung des gespeicherten Logiksignals mit einem von einer in den Steckplatz (1, 2, 3) eingesteckten Steckkarte generierten Logiksignal (20) umfasst.

4. Steuerungsschaltung nach Anspruch 3, **dadurch gekennzeichnet, dass** das Logikelement (21) ein Und- oder ein Nicht-Und-Gatter ist.

5. Steuerungsschaltung nach einem der Ansprüche 1 bis 4, **dadurch gekennzeichnet, dass** es sich bei dem Speicherelement (13) um ein Flip-Flop handelt.

6. Steuerungsschaltung nach einem der Ansprüche 1 bis 5, **dadurch gekennzeichnet, dass** der Ausgangsanschluss (7) einer prioritätsverketteten Signalleitung (9) der Busplatine zugeordnet ist.

7. Steuerungsschaltung nach Anspruch 6, **gekennzeichnet durch** Unterbrechungsschaltelemente (17) zur Unterbrechung der prioritätsverketteten Signalleitung (9) in dem Initialisierungszustand des Computersystems.

## Claims

1. A control circuit for a bus board of a computer system comprising an electronic detection element (10) which is connected on the one hand to an output terminal (7) of an expansion slot (1, 2, 3) of the bus board and on the other hand to a bridging switching element (11), wherein input and output terminals (7, 8) of the expansion slot (1, 2, 3) can be bridged by means of the bridging switching element (11), **characterised in that** the detection element (10) includes a memory element (13), by means of which a logic signal applied at the output terminal (7) in an initialisation state of the computer system can be stored.

2. A control circuit according to claim 1 **characterised by** a signal generating circuit (12), by means of which a defined logic signal can be produced at an input terminal (8) associated with the output terminal (7) in the initialisation state of the computer system.

3. A control circuit according to claim 1 or claim 2 **characterised in that** the detection element (10) also includes a logic element (21) for logical linking of the stored logic signal with a logic signal (20) generated by an expansion card fitted into the expansion slot (1,2, 3).

4. A control circuit according to claim 3 **characterised in that** the logic element (21) is an and- or a nand-gate.

5. A control circuit according to one of claims 1 to 4 **characterised in that** the memory element (13) is a flip-flop.

6. A control circuit according to one of claims 1 to 5 **characterised in that** the output terminal (7) is associated with a priority-linked signal line (9) of the bus board.

7. A control circuit according to claim 6 **characterised by** interrupt switching elements (17) for interrupting the priority-linked signal line (9) in the initialisation state of the computer system.

## Revendications

1. Circuit de commande pour une carte de bus d'un système informatique, comprenant un élément de détection (10) électronique, qui est relié d'une part à un branchement de sortie (7) d'un slot (1, 2, 3) de la carte de bus et d'autre part à un élément de circuit de pontage (11), des branchements d'entrée et de sortie (7, 8) du slot (1, 2, 3) pouvant être shuntés au moyen de l'élément de circuit de pontage (11), **caractérisé en ce que** l'élément de détection (10) comprend un élément de mémoire (13), au moyen duquel un signal de logique s'appliquant dans un état d'initialisation du système informatique sur le branchement de sortie (7) peut être mémorisé.

2. Circuit de commande selon la revendication 1, **caractérisé par** un circuit de génération de signal (12) au moyen duquel un signal de logique défini peut être généré sur un branchement d'entrée (8) attribué au branchement de sortie (7) dans l'état d'initialisation du système informatique.

3. Circuit de commande selon la revendication 1 ou 2, **caractérisé en ce que** l'élément de détection (10) comprend d'autre part un élément de logique (21) pour l'association logique du signal de logique mémorisé avec un signal de logique (20) généré par une carte enfichable emboîtée dans le slot (1, 2, 3).

4. Circuit de commande selon la revendication 3, **caractérisé en ce que** l'élément de logique (21) est une porte ET ou une porte NON-ET.

5. Circuit de commande selon l'une quelconque des revendications 1 à 4, **caractérisé en ce qu'**il s'agit d'un flip-flop en ce qui concerne l'élément de mémoire (13).

6. Circuit de commande selon l'une quelconque des revendications 1 à 5, **caractérisé en ce que** le branchement de sortie (7) est attribué à une ligne de signalisation (9), enchaînée au niveau de la priorité, de la carte de bus.

7. Circuit de commande selon la revendication 6, **caractérisé par** des éléments de commutation d'interruption (17) pour l'interruption de la ligne de signalisation (9) enchaînée au niveau de la priorité dans l'état d'initialisation du système informatique.
